(19) Europäisches Patentamt
European Patent Office
Office européen des brevets

(11) Veröffentlichungsnummer: **0 026 743**
**B1**

(12) # EUROPÄISCHE PATENTSCHRIFT

(45) Veröffentlichungstag der Patentschrift: **25.05.83**

(51) Int. Cl.³: **C 07 C 87/60**, A 01 N 33/18

(21) Anmeldenummer: **80810298.2**

(22) Anmeldetag: **22.09.80**

(54) **Hochsubstituierte Diphenylamine, deren Herstellung und deren Verwendung.**

(30) Priorität: **28.09.79 CH 8790/79**
**10.06.80 CH 4464/80**

(43) Veröffentlichungstag der Anmeldung: **08.04.81 Patentblatt 81/14**

(45) Bekanntmachung des Hinweises auf die Patenterteilung: **25.05.83 Patentblatt 83/21**

(84) Benannte Vertragsstaaten: **AT BE CH DE FR GB IT LI NL**

(56) Entgegenhaltungen:
**FR-A-2 129 775**
**FR-A-2 130 421**
**FR-A-2 263 226**
**FR-A-2 325 325**
**FR-A-2 325 635**

(73) Patentinhaber: **CIBA-GEIGY AG, Patentabteilung Postfach, CH-4002 Basel (CH)**

(72) Erfinder: **Ehrenfreund, Josef, Dr., Langenhagweg 11, CH-4123 Allschwil (CH)**
Erfinder: **Schurter, Rolf, Dr., Holzmattstrasse 45, CH-4102 Binningen (CH)**

**EP 0 026 743 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Hochsubstituierte Diphenylamine, deren Herstellung und deren Verwendung

Die vorliegende Erfindung betrifft neue hochsubstituierte Diphenylamine, Verfahren zur Herstellung dieser Verbindungen und ihre Verwendung als Herbizide und in der Schädlingsbekämpfung.

Bei den erfindungsgemäßen hochsubstituierten Diphenylaminen handelt es sich um 2,4-Dinitro-6-trifluormethyl-diphenylamine der Formel I

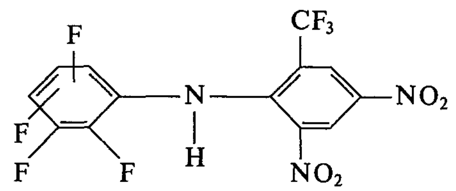

(I)

Die erfindungsgemäß vorgeschlagenen Verbindungen der Formel I, können nach an sich bekannten Verfahren hergestellt werden (vgl. u. a. die deutschen Offenlegungsschriften Nr. 2 509 416 und 2 728 536).

So kann man z. B. die Verbindungen der Formel I erhalten durch Umsetzung der Aniline

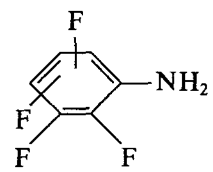

(II)

in Gegenwart einer Base mit der Verbindung der Formel III

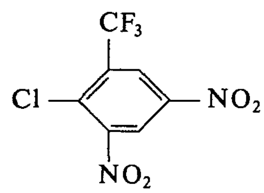

(III)

Das oben erwähnte Verfahren kann vorzugsweise unter normalem Druck und in Gegenwart eines inerten organischen Lösungs- oder Verdünnungsmittels durchgeführt werden. Als Lösungs- oder Verdünnungsmittel eignen sich z. B. Äther und ätherartige Verbindungen, wie Diäthyläther, Dipropyläther, Dibutyläther, Dioxan, Dimethoxyäthan und Tetrahydrofuran; N,N-dialkylierte Carbonsäureamide, wie Dimethylformamid; aliphatische, aromatische sowie halogenierte Kohlenwasserstoffe, insbesondere Benzol, Toluol, Xylol, Chloroform, Methylenchlorid, Tetrachlorkohlenstoff und Chlorbenzol; Nitrile, wie Acetonitril oder Propionitril; Dimethylsulfoxid sowie Ketone, z. B. Methyläthylketon, Methylisopropylketon und Methylisobutylketon. Man arbeitet im allgemeinen bei einer Temperatur von −10 bis 150° C, vorzugsweise zwischen 0 und 40° C, und in Gegenwart eines basischen Kondensationsmittels, wie z. B. eines Alkali- oder Erdalkalihydroxids, -carbonates oder -hydrides, vorzugsweise Kaliumhydroxid und Natriumhydrid.

Die Ausgangsstoffe der Formeln II und III sind bekannt oder können analog bekannten Verfahren hergestellt werden. So ist das substituierte Benzotrifluorid der Formel III gemäß literaturbekannten Verfahren herstellbar (vgl. deutsche Offenlegungsschrift Nr. 2 728 536 und britische Patentschrift Nr. 1 544 078).

Es ist bereits bekannt, daß bestimmte hochsubstituierte Diphenylamine, die unter anderem Nitro- und/oder Trifluormethyl-Substituenten aufweisen, biozide Wirkung besitzen. Derartige Verbindungstypen werden in der US-Patentschrift Nr. 4 117 167, den deutschen Offenlegungsschriften Nr. 2 213 058, 2 427 120, 2 509 416 und 2 728 536, der britischen Patentschrift Nr. 1 544 078, der japanischen Patentpublikation Nr. 2 105 133 und den französischen Patentschriften Nr. 2 325 325, 2 325 635 und 2 130 421 beschrieben.

Überraschenderweise wurde nun gefunden, daß die erfindungsgemäßen hochsubstituierten Diphenylamine der Formel I bei guter Verträglichkeit gegenüber Kulturpflanzen neben einer breiten bioziden Wirksamkeit, als Insektizid, Akarizid, Ovizid, Ectoparasitizid, Algizid, Fungizid und Bakterizid insbesondere als selektive Herbizide erhöhte Wirkung zeigen.

So eignen sich die Verbindungen der Formel I zur Bekämpfung von Vertretern der Ordnung Akarina der Familien: Ixodidae, Argasidae, Tetranychidae, Dermanyssidae, sowie auch von Insekten der Familien: Acrididae, Blattidae, Gryllidae, Gryllotalpidae, Tettigoniidae, Cimicidae, Pyrrhocoridae, Reduviidae, Aphididae, Delphacidae, Diaphididae, Pseudococcidae, Chrysomilidae, Coccinellidae,

Bruchidae, Scarabaeidae, Dermestidae, Tenebrionidae, Curculionidae, Tincidae, Noctuidae, Lymantriidae, Pyralidae, Galleridae, Culicidae, Tipulidae, Stomoxydae, Muscidae, Calliphoridae, Trypetidae, Pulicidae.

Besonders hervorzuheben ist, daß die erfindungsgemäßen Verbindungen der Formel I eine überraschend hohe und spezifische Wirksamkeit sowohl gegen Pflanzen schädigende Milben als auch gegen ektoparasitäre Akariden (Milben und Zecken) besitzen. Die Verbindungen der Formel I können mit Erfolg vor allem zur Bekämpfung von phytophagen Milben, z. B. der Familien Tetranychidae und Phytoptipalidae (Spinnmilben), Tarsonemidae (Weichheitmilben) und Eriophyidae (Gallmilben), eingesetzt werden. Die Verbindungen der Formel I sind insbesondere zur Bekämpfung der folgenden, Obst- und Gemüsekulturen befallenden Milbenspezies geeignet: Tetranychus urticae, Tetranychus cinnabarinus, Panonychus ulmi, Bryobia rubrioculus, Panonychus citri, Eriophes pyri, Eriophyes ribis, Eriophyes vitis, Tarsomemus pallidus, Phyllocoptes vitis und Phyllocoptruta oleivora.

Im Rahmen ihrer insektiziden und insektizid-oviziden Wirksamkeit können die Verbindungen der Formel I auch zur Bekämpfung von pflanzenschädigenden Fraßinsekten in Zier- und Nutzpflanzungen, z. B. in Baumwollkulturen (wie Spodoptera littoralis und Heliothis virescens) eingesetzt werden.

Die erfindungsgemäßen Verbindungen der Formel I zeigen vor allem ausgezeichnete allgemein herbizide und selektivherbizide Eigenschaften und erweisen sich als besonders vorteilhaft zum Bekämpfen von Unkräutern in Kulturen von Nutzpflanzen, insbesondere in Kulturen von Mais, Soja, Baumwolle, Getreide, wie Gerste und Reis, sowie von Zuckerrüben. Es wurde eine besonders gute Verträglichkeit gegenüber sowohl gesätem »Trockenreis« wie auch verpflanztem »Wasserreis« festgestellt. Die Anwendung kann sowohl im Vorauflauf- wie im Nachauflaufverfahren vorgenommen werden. Dabei können die Aufwandmengen in weiten Grenzen schwanken, z. B. zwischen 0,1 bis 10 kg Wirkstoff pro Hektar; vorzugsweise werden jedoch 0,5 bis 5 kg Wirkstoff pro Hektar eingesetzt.

Die Verbindungen der Formel I besitzen ferner günstige Eigenschaften als Mikrobizide, insbesondere als Fungizide und Bakterizide zum Schützen von Kulturpflanzen, wie z. B. Getreide (Weizen, Gerste, Roggen, Hafer, Reis), Rüben (Zucker- und Futterrüben), Kern-, Stein- und Beerenobst (Äpfel, Birnen, Pflaumen, Pfirsiche, Mandeln, Kirschen, Erd-, Him- und Brombeeren), Hülsenfrüchte (Bohnen, Linsen, Erbsen, Soja), Ölkulturen (Raps, Senf, Mohn, Oliven, Sonnenblumen, Kokos, Rizinus, Kakao, Erdnüsse), Gurkengewächse (Kürbis, Gurken, Melonen), Fasergewächse (Baumwolle, Flachs, Hanf, Jute), Citrusfrüchte (Orangen, Zitronen, Pampelmusen, Mandarinen), Gemüse (Spinat, Kopfsalat, Spargel, Kohlarten, Möhren, Zwiebeln, Tomaten, Kartoffeln, Paprika) oder Pflanzen wie Mais, Tabak, Nüsse, Kaffee, Zuckerrohr, Weinreben, Hopfen, Bananen- und Naturkautschukgewächse sowie Zierpflanzen.

Mit den Verbindungen der Formel I können an Pflanzen oder Pflanzenteilen (Früchte, Blüten, Laubwerk, Stengel, Knollen, Wurzeln) dieser und verwandter Nutzkulturen auftretenden Pilze oder Bakterien eingedämmt oder vernichtet werden, wobei auch später zuwachsende Pflanzenteile von derartigen Mikroben verschont bleiben. Die Verbindungen der Formel I sind gegen die den folgenden Klassen angehörenden phytopathogenen Pilze wirksam: Ascomycetes (z. B. Erysiphaceae, Podosphaera, Venturia; Basidiomycetes wie vor allem Rostpilze (z. B. Puccinia); Fungi imperfecti (z. B. Botrytis) und die der Klasse der Phycomycetes angehörenden Oomycetes. Die Verbindungen der Formel I können auch als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden. Als Beispiele eines pflanzenschädigenden Bakteriums, das mit den erfindungsgemäßen Verbindungen der Formel I bekämpft werden kann, sei Xanthomonas orizae genannt.

Es wurde ferner beobachtet, daß die Verbindungen der Formel I starke algizide Wirkung besitzen, wobei es in Versuchen gelang, die Grünalge Enteromorpha intestinalis in geringsten Aufwandmengen so zu schädigen, daß sie sich nachher, in frischem Meerwasser nicht mehr erholen konnten.

Eine weitere Anwendung der Verbindungen der Formel I ist die Desikkation und Defoliation oberirdischer Pflanzenteile in Baumwoll- und Kartoffelkulturen kurz bevor deren Ernte zwecks Erleichterung der Erntearbeiten.

Die Verbindungen der Formel I können für sich allein oder zusammen mit geeigneten Träger und/oder Zuschlagstoffen eingesetzt werden. Geeignete Träger und Zuschlagstoffe können fest oder flüssig sein und entsprechen den in der Formulierungstechnik üblichen Stoffen, wie z. B. natürlichen oder regenerierten Stoffen, Lösungs-, Dispergier-, Netz-, Haft-, Verdickungs-, Binde- und/oder Düngemitteln. Zur Applikation können die Verbindungen der Formel I zu Stäubemitteln, Emulsionskonzentraten, Granulaten, Dispersionen, Sprays, zu Lösungen oder Aufschlämmungen in üblicher Formulierung, die in der Applikationstechnik zum Allgemeinwissen gehören, verarbeitet werden.

Die Herstellung erfindungsgemäßer Mittel erfolgt in an sich bekannter Weise durch inniges Vermischen und/oder Vermahlen eines Wirkstoffs der Formel I mit geeigneten Trägerstoffen, gegebenenfalls unter Zusatz von gegenüber dem Wirkstoff inerten Dispergier- und Lösungsmitteln. Der Wirkstoff kann in den folgenden Aufarbeitungsformen vorliegen und angewendet werden:

Feste Aufarbeitungsformen:
Stäubemittel, Streumittel, Granulate (Umhüllungsgranulate, Imprägnierungsgranulate und Homogengranulate);

Flüssige Aufarbeitungsformen:
a) in Wasser dispergierbare Wirkstoffkonzentrate; Spritzpulver (wettable powders), Pasten, Emulsionen;
b) Lösungen.

Der Gehalt an Wirkstoff in solchen Mitteln liegt zwischen 0,1 bis 95%.
Die nachfolgenden Beispiele erläutern die Erfindung im Detail. Teile und Prozentangaben beziehen sich darin auf das Gewicht, die Temperaturen sind in Centigrad gegeben.

Beispiel 1

Herstellung von 2,3,4,6-Tetrafluor-2',4'-dinitro-6'-trifluormethyl-diphenylamin (Verbindung Nr. 1)

Es werden 8,25 g (0,05 Mol) 2,3,4,6-Tetrafluoranilin in 100 ml trockenem Dimethylformamid vorgelegt und bei Raumtemperatur 5,6 g pulverisiertes Kaliumhydroxid hinzugefügt. Anschließend werden 13,6 g (0,05 Mol) 2-Chlor-3,5-dinitrobenzotrifluorid in 50 ml Dimethylformamid zugetropft, wobei die Temperatur auf 20 – 25° C gehalten wird. Man läßt über Nacht stehen und gießt das dunkle Reaktionsgemisch auf 100 ml 2 NHCl in 500 g Eis. Man extrahiert das Gemisch einige Male mit Äther, wäscht die gesammelten Ätherphasen mit ges. Kochsalzlösung und trocknet über Natriumsulfat. Nach Verdampfen des Äthers am Wasserstrahlvakuum wird ein dunkles Öl erhalten, welches durch Animpfen zur Kristallisation gebracht wird. Das Kristallisat wird mit 100 ml Hexan digeriert und die verbleibenden Kristalle werden aus Methanol/Wasser umkristallisiert. Man erhält die Titelverbindung vom Schmelzpunkt 130,5 – 132,5° C.
In analoger Weise zu diesem Beispiel wurden folgende Verbindungen hergestellt:

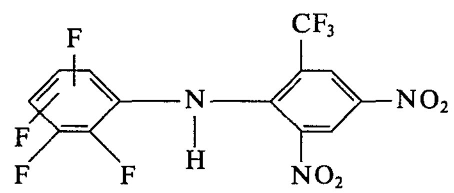

| Nr. | Stellung der Fluor-Substituenten | Physikalische Daten |
|---|---|---|
| 2 | 2,3,4,5-Tetrafluor | Smp. 81–83° C |
| 3 | 2,3,5,6-Tetrafluor | Smp. 96–98° C |

Beispiel 2

Herstellung einiger für die Schädlingsbekämpfung gebrauchsfertigen Wirkstoffkonzentrate

Stäubemittel:
Zur Herstellung eines a) 5%igen und b) 2%igen Stäubemittels werden die folgenden Stoffe verwendet:

a) 5 Teile Wirkstoff, der Formel I
95 Teile Talkum;
b) 2 Teile Wirkstoff,
1 Teil hochdisperse Kieselsäure,
97 Teile Talkum.

Der Wirkstoff wird mit den Trägerstoffen vermischt und vermahlen.

Granulat:
Zur Herstellung eines 5%igen Granulates werden die folgenden Stoffe verwendet:

| | |
|---|---|
| 5,00 Teile | Wirkstoff, der Formel I |
| 0,25 Teile | Epichlorhydrin, |
| 0,25 Teile | Cetylpolyglykoläther, |
| 3,50 Teile | Polyäthylenglykol, |
| 91,00 Teile | Kaolin (Korngröße 0,3 – 0,8 mm). |

Die Aktivsubstanz wird mit Epichlorhydrin vermischt und mit 6 Teilen Aceton gelöst, hierauf wird Polyäthylenglykol und Cetylpolyglykoläther zugesetzt. Die so erhaltene Lösung wird auf Kaolin aufgesprüht und anschließend das Aceton im Vakuum verdampft.

Spritzpulver:

Zur Herstellung eines a) 40%igen, b) und c) 25%igen, d) 10%igen Spritzpulvers werden folgende Bestandteile verwendet:

| | | |
|---|---|---|
| a) | 40 Teile | Wirkstoff, der Formel I |
| | 5 Teile | Ligninsulfonsäure-Natriumsalz, |
| | 1 Teil | Dibutylnaphthalinsulfonsäure-Natriumsalz |
| | 54 Teile | Kieselsäure; |
| b) | 25,0 Teile | Wirkstoff, der Formel I |
| | 4,5 Teile | Calcium-Ligninsulfonat, |
| | 1,9 Teile | Champagne-Kreide/Hydroxyäthylcellulose-Gemische (1 : 1), |
| | 1,5 Teile | Natrium-dibutyl-naphthalinsulfonat, |
| | 19,5 Teile | Kieselsäure, |
| | 19,5 Teile | Champagne-Kreide, |
| | 28,1 Teile | Kaolin; |
| c) | 25,0 Teile | Wirkstoff, der Formel I |
| | 2,5 Teile | Isooctylphenoxy-polyoxyäthylen-äthanol, |
| | 1,7 Teile | Champagne-Kreide/Hydroxyäthylcellulose-Gemisch (1 : 1), |
| | 8,3 Teile | Natriumaluminiumsilikat, |
| | 16,5 Teile | Kieselgur, |
| | 46,0 Teile | Kaolin; |
| d) | 10 Teile | Wirkstoff, der Formel I |
| | 3 Teile | Gemisch der Natriumsalze von gesättigten Fettalkoholsulfaten, |
| | 5 Teile | Naphthalinsulfonsäure/Formaldehyd-Kondensat, |
| | 82 Teile | Kaolin. |

Der Wirkstoff wird in geeigneten Mischern mit den Zuschlagstoffen innig vermischt und auf entsprechenden Mühlen und Walzen vermahlen. Man erhält Spritzpulver, die sich mit Wasser zu Suspensionen jeder gewünschten Konzentration verdünnen lassen.

Emulgierbare Konzentrate:

Zur Herstellung eines a) 10%igen, b) 25%igen und c) 50%igen emulgierbaren Konzentrates werden folgende Stoffe verwendet:

| | | |
|---|---|---|
| a) | 10,0 Teile | Wirkstoff, der Formel I |
| | 3,4 Teile | epoxydiertes Pflanzenöl, |
| | 3,4 Teile | eines Kombinationsemulgators, bestehend aus Fettalkoholpolyglykoläther und Alkylaralkyl-sulfonat-Calcium-Salz, |
| | 40,0 Teile | Dimethylformamid, |
| | 43,2 Teile | Xylol; |
| b) | 25,0 Teile | Wirkstoff, der Formel I |
| | 2,5 Teile | epoxydiertes Pflanzenöl, |
| | 10,0 Teile | eines Alkylarylsulfonat/Fettalkoholpolyglykoläther-Gemisches, |
| | 5,0 Teile | Dimethylformamid, |
| | 57,5 Teile | Xylol; |
| c) | 50,0 Teile | Wirkstoff, der Formel I |
| | 4,2 Teile | Tributylphenol-Polyglykoläther, |
| | 5,8 Teile | Calcium-Dodecylbenzolsulfonat, |
| | 20,0 Teile | Cyclohexanon, |
| | 20,0 Teile | Xylol. |

Aus solchen Konzentrationen können durch Verdünnen mit Wasser Emulsionen jeder gewünschten Konzentration hergestellt werden.

Sprühmittel:

Zur Herstellung eines a) 5%igen und b) 95%igen Sprühmittels werden die folgenden Bestandteile verwendet:

| | | |
|---|---|---|
| a) | 5 Teile | Wirkstoff, der Formel I |
| | 1 Teil | Epichlorhydrin, |
| | 94 Teile | Benzin (Siedegrenzen 160 – 190° C); |
| b) | 95 Teile | Wirkstoff, |
| | 5 Teile | Epichlorhydrin. |

## Beispiel 3

### Wirkung gegen pflanzenschädigende Akariden (Milben) Tetranychus urticae (OP-sensible) und Tetranychus cinnabarinus (OP-tolerant)

Die Primärblätter von Phaseolus vulgaris (Buschbohnen) wurden 16 Stunden vor dem Versuch auf akarizide Wirkung mit infestierten Blattstücken aus einer Massenzucht von Tetranychus urticae (OP-sens) oder Tetranychus cinnabarinus (OP-tol.) belegt. (Die Toleranz der Versuchstiere bezieht sich auf die Verträglichkeit gegenüber Diazinon.) Zum Zeitpunkt der Wirkstoff-Applikation befinden sich dann sowohl Eier wie auch sämtliche beweglichen Stadien in größerer Menge auf den Pflanzen. Auf einer Drehtelleranlage wurden die mit den Milben infizierten Pflanzen mit etwa 100 ml einer wäßrigen Emulsionszubereitung, enthaltend die Wirksubstanz in Konzentrationen von 200 oder 400 ppm, besprüht, so daß kein Ablaufen der Spritzemulsion eintrat.

Nach 24 Stunden und wiederum nach 7 Tagen wurden Imagines und Larven (alle beweglichen Stadien) unter dem Binokular auf lebende und tote Individuen ausgewertet.

Man verwendete pro Konzentration und pro Testspezies eine Pflanze. Während des Versuchsverlaufs standen die Pflanzen in Gewächshauskabinen bei 25° C.

Die Verbindungen Nr. 1 und 3 zeigten beim Besprühen mit 400 ppm nach 7 Tagen bloß noch tote Individuen.

## Beispiel 4

### Ovizide Wirkung auf Heliothis virescens und Spodoptera littoralis

Entsprechende Mengenanteile einer benetzbaren pulverförmigen Formulierung, enthaltend 25 Gew.-% des zu prüfenden Wirkstoffes, wurden mit jeweils soviel Wasser verdünnt, daß sich wäßrige Emulsionen von ansteigender Wirkstoffkonzentration ergaben.

In diese wirkstoffhaltigen Emulsionen wurden eintägige, auf Fließpapier abgelegte Eigelege von Heliothis bzw. Spodoptera während drei Minuten eingetaucht und dann auf Rundfiltern abgenutscht. Die so behandelten Gelege wurden nach dem Antrocknen der Emulsion in Petrischalen ausgelegt und bei 28° C in der Dunkelheit aufbewahrt. Nach etwa 4 Tagen wurde die Schlupfrate im Vergleich zu unbehandelten Kontrollen festgestellt. Zur Auswertung wurde die zur 100%igen Abtötung der Eier erforderliche minimale Wirkstoffkonzentration bestimmt.

Die Verbindungen Nr. 1, 2 und 3 zeigten gute ovizide Wirksamkeit im obigem Test.

## Beispiel 5

### Wirkung auf Aphis craccivora

Keimlinge von Pisum sativum wurden 3 Tage vor der Applikation mit Aphis craccivora infestiert (ca. 200 Tiere pro Pflanze), so daß eine Population in allen Entwicklungsstadien auf den keimenden Pflanzen vorlag. Jeweils 4 der indizierten Keimlinge wurden dann unter Wachstumsbedingungen in einem Becher fixiert und mit einer wäßrigen Formulierung des Wirkstoffes besprüht, so daß die Oberfläche der infizierten Keimlinge mit einer gleichförmigen Schicht aus feinen Tröpfchen bedeckt war. Es wurden jeweils abfallende Wirkstoffkonzentrationen von 200, 100, 50, 10 und 1 ppm angewendet, um die Wirkungsgrenze der geprüften Verbindung festzustellen. Nach 2 Tagen wurden die Ergebnisse aufgezeichnet. Die behandelten Keimlinge wurden unter einem Stereomikroskop auf prozentuale Abtötung der Aphis-Population geprüft.

Die Verbindungen Nr. 1, 2 und 3 zeigten bei höheren Konzentrationen eine gute Abtötungsrate.

Beispiel 6

Pre-emergente Herbizid-Wirkung (Keimhemmung)

Im Gewächshaus wurde unmittelbar nach der Einsaat der Versuchspflanzen sinapis alba und stellaria media in Saatschalen die Erdoberfläche mit einer wäßrigen Dispersion des Wirkstoffes, erhalten aus einem 25%igen Emulsionskonzentrat resp. aus einem 25%igen Spritzpulver, behandelt. Es wurde eine Konzentration entsprechend 4,0 kg Wirksubstanz pro Hektar angewendet. Die Saatschalen wurden im Gewächshaus bei 22–25°C und 50–70% rel. Luftfeuchtigkeit gehalten. Der Versuch wurde nach 3 Wochen ausgewertet und die Resultate hinsichtlich der Keimhemmung gegenüber unbehandelten Kontrollen bonitiert.

Die Verbindungen Nr. 1–3 zeigten gute Wirkung im obigem Test vor allem gegen die zweikeimblättigen Unkräuter.

Beispiel 7

Post-emergente Herbizid-Wirkung (Kontaktherbizid)

Eine Anzahl von eingetopften Unkräutern, sowohl monocotyle wie dicotyle, wurden nach dem Auflaufen (im 4- bis 6-Blattstadium) mit einer wässerigen Wirkstoffdispersion in einer Dosierung von 4,0 kg Wirksubstanz pro Hektar auf die jeweilige Pflanze gespritzt und diese bei 24–26° C und 45–60% rel. Luftfeuchtigkeit gehalten. Mindestens 15 Tage nach Behandlung wurde der Versuch ausgewertet und das Ergebnis hinsichtlich Wachstumshemmung und Abtötung der Pflanzen bonitiert.

Als Versuchspflanzen dienten: lolium perenne, solanum lycopersicum, sinapis alba und stellaria media.

Die Verbindungen Nr. 1–3 zeigten gute Wirkung im obigen Test gegen alle geprüften Pflanzensorten.

Beispiel 8

Wirkung gegen Puccinia graminis auf Triticum vulgare

a) Residual-protektive Wirkung:
Weizenpflanzen wurden 6 Tage nach der Aussat mit einer aus Spritzpulver des Wirkstoffes hergestellten Spritzbrühe (0,06% Aktivsubstanz) besprüht. Nach 24 Stunden wurden die behandelten Pflanzen mit einer Uredosporensuspension des Pilzes infiziert. Nach Inkubation während 48 Stunden bei 95–100% relativer Luftfeuchtigkeit und ca. 20° C wurden die infizierten Pflanzen in einem Gewächshaus bei ca. 22° C gehalten. Die Auswertung hinsichtlich der Rostpustelnentwicklung erfolgte 12 Tage nach der Infektion.

b) Systemische Wirkung:
Zu Weizenpflanzen wurde 5 Tage nach der Aussaat eine aus Spritzpulver des Wirkstoffes hergestellte Spritzbrühe gegossen (0,006% Aktivsubstanz bezogen auf das Bodenvolumen). Nach 48 Stunden wurden die behandelten Pflanzen mit einer Uredosporensuspension des Pilzes infiziert. Nach einer Inkubation während 48 Stunden bei 95–100% relativer Luftfeuchtigkeit und ca. 20° C wurden die infizierten Pflanzen in einem Gewächshaus bei ca. 22° C aufgestellt. Die Beurteilung der Rostpustelnentwicklung erfolgte 12 Tage nach der Infektion.

Die Verbindungen Nr. 1–3 zeigten ausgezeichnete Residual- sowie Anzeichen von systemischer Wirkung in diesen Tests.

Beispiel 9

Wirkung gegen Botrytis cinerea auf Vicia faba

Residual-protektive Wirkung:
Ca. 10 cm hohe Vicia-Pflanzen wurden mit einer aus Spritzpulver des Wirkstoffes hergestellten Spritzbrühe (0,02% Aktivsubstanz) besprüht. Nach 48 Stunden wurden die behandelten Pflanzen mit einer Konidiensuspension des Pilzes infiziert. Nach einer Inkubation der infizierten Pflanzen während 2–3 Tagen bei 95–100% relativer Luftfeuchtigkeit und 21° C erfolgte die Beurteilung des Pilzbefalls.

Die Verbindungen Nr. 1 und 3 zeigten zufriedenstellende Residual-Wirkung in diesen Tests.

## Beispiel 10

### Wirkung gegen Erysiphe graminis auf Hordeum vulgare

a) Residual-protektive Wirkung:
Ca. 8 cm hohe Gerstenpflanzen wurden mit einer aus Spritzpulver des Wirkstoffes hergestellten Spritzbrühe (0,02% Aktivsubstanz) besprüht. Nach 3–4 Stunden wurden die behandelten Pflanzen mit Konodien des Pilzes bestäubt. Die infizierten Gerstenpflanzen wurden in einem Gewächshaus bei ca. 22° C aufgestellt und der Pilzbefall nach 10 Tagen beurteilt.

Die Verbindung Nr. 1 wirkte gut in obigem Test.

## Beispiel 11

### Wirkung gegen Xanthomonas oryzae auf Reis (Oryza sativa)

a) Residual-protektive Wirkung:
Reispflanzen der Sorte »Caloro« oder »S 6« wurden nach 3wöchiger Anzucht im Gewächshaus mit der Prüfsubstanz in Form einer Spritzbrühe (0,06% Aktivsubstanz) besprüht. Nach eintägigem Antrocknen dieses Spritzbelages wurden die Pflanzen in einem Klimaraum bei 24° C und 75–85% relativer Luftfeuchtigkeit aufgestellt und infiziert. Die Infektion erfolgte, indem die Blattspitzen mit einer Schere, die zuvor in eine Suspension von Xanthomonas oryzae eingetaucht worden war, abgeschnitten wurden. Nach 10tägiger Inkubation in demselben Raum wurden die angeschnittenen Blätter welk, rollten sich ein und wurden nekrotisch. Das Ausmaß dieser Krankheitssymptome diente zur Beurteilung der residualen Wirksamkeit der Prüfsubstanz.

Die Verbindungen Nr. 1–3 zeigten in diesem Test auch bakterizide Wirkung.

## Beispiel 12

### Wirkung gegen die Grünalge Enteromorpha

Die Untersuchung der Wirkung gegen die beim Meerwasser-Fouling wichtigste Grünalge Enteromorpha erfolgt in steril filtriertem Meerwasser, welches eine Erd-Schreiber-Lösung enthält. Diese Lösung setzt sich aus einem Nährstoffextrakt, Phosphat und Nitrat zusammen. Die Bebrütung von Enteromorpha intestinalis findet im Lichtthermostaten bei 18° C unter einem 14 h-Licht-10 h-Dunkel-Wechsel statt.

Die auf diese Weise gezüchteten Algen werden den zu untersuchenden Algiziden für kurze Zeit (2 bzw. 4 h) in Meerwasser ausgesetzt. Die minimale Abtötungskonzentration (MKC) wird dadurch bestimmt, daß man die Algen, nach der Einwirkungszeit einer bestimmten Menge Algizid enthaltenden Meerwassers, diesem entnimmt, sie wäscht, und nach 6–8wöchiger erneuter Bebrütung in frischem Meerwasser auf Wuchs bzw. Abtötung untersucht.

Die minimale Abtötungskonzentration (MKC) gibt die Stoffmenge an, die notwendig ist, die Alge innerhalb einer bestimmten Zeit so zu schädigen, daß sie sich in frischem Meerwasser nicht mehr erholen kann und abstirbt.

In diesem Test zeigten die Verbindungen Nr. 1–3 bei MKC von 1 ppm sichere algizide Wirkung.

## Beispiel 13

### Selektive herbizide Wirkung auf Reis im Nachlaufverfahren

Reispflänzchen, welche 25 Tage alt sind, wurden im Gewächshaus in große rechteckige Eternitschalen verpflanzt. Zwischen die Reihen der Reispflanzen wurden dann Samen der in Reiskulturen vorkommenden Unkräuter Echinochloa crus galli, Cyperus difformis, Ammamia und Rotala gesät. Die Schalen wurden gut bewässert und bei einer Temperatur von ca. 25° C und hoher Luftfeuchtigkeit gehalten. Nach 12 Tagen, wenn die Unkräuter aufgelaufen sind und das 2–3-Blattstadium erreicht haben, wurde die Erde in der Schale mit einer 2,5 cm hohen Schicht Wasser bedeckt. Der Wirkstoff wurde dann als Emulsionskonzentrat mittels einer Pipette zwischen die Pflanzenreihen appliziert, wobei man das Emulsionskonzentrat so verdünnte und auftrug, daß es einer Applikationsmenge im Feld von 4, 2, 1 und 1/2 kg Wirkstoff pro Hektar entsprach. Der Versuch wurde nach 4 Wochen ausgewertet. Die Verbindungen 1–3 schädigten in Aufwandmengen von 2 und 1 kg/ha selektiv die Unkräuter.

Beispiel 14

Desikkations- und Defoliationswirkung

In einem Gewächshaus wurden Baumwollpflanzen der Sorte Deltapine in Tontöpfen angezogen. Nach abgeschlossener Kapselbildung wurden sie mit wässerigen Zubereitungen des Wirkstoffes Nr. 1 in einer Aufwandmenge, die 1,2, 0,6 und 0,3 kg/ha im Feld entspräche, gespritzt. Unbehandelte Pflanzen wurden als Kontrolle belassen. Die Auswertung des Versuches erfolgte 3, 7 und 14 Tage nach Applikation der Wirksubstanz durch Bestimmen des Grades an Defoliation (% abgefallene Blätter) und an Desikkation (% Austrocknung der an der Pflanze verbleibenden Blätter).

Die Verbindung Nr. 1 beließ nach 14 Tagen bloß noch wenige vertrocknete Blätter auf der Pflanze bei 1,2 und 0,6 kg/ha Aufwandmenge.

Beispiel 15

Wirkung gegen ectoparasitäre Akariden (Zecken: Rhipicephalus bursa (Imagines und Larven), Ablyomma hebraeum (♀ Imagines, Nymphen und Larven) und Boophilus microplus (Larven O. P. sensible und O. P. tolerant und ♀ Imagines)

Als Testobjekte wurden Larven (jeweils ca. 50), Nymphen (jeweils ca. 25) oder Imagines (jeweils ca. 10) der Zeckenarten Rhipicephalus bursa, Ablyomma hebraeum und Boophilus microplus verwendet. Die Testtiere wurden für kurze Zeit in eine wäßrige Emulsion bzw. Lösung enthaltend 0,1; 1,0; 10; 50 oder 100 ppm der zu prüfenden Verbindung getaucht. Die in Teströhrchen befindlichen Emulsionen bzw. Lösungen wurden dann mit Watte aufgenommen und die benetzten Testtiere in den so kontaminierten Röhrchen belassen. Eine Auswertung der erzielten Abtötungsrate bei jeder Konzentration erfolgte für Larven nach 3 Tagen und für Nymphen und Imagines nach 14 Tagen. Die Verbindungen 1 – 3 zeigten gute bis ausgezeichnete Wirkung im obigen Test.

**Patentansprüche**

1. Die Verbindungen der Formel I

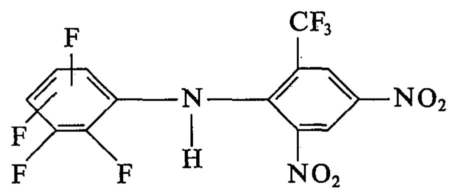

(I)

2. Die Verbindung 2,3,4,6-Tetrafluor-2',4'-dinitro-6'-trifluormethyl-diphenylamin gemäß Anspruch 1.
3. Die Verbindung 2,3,4,5-Tetrafluor-2',4'-dinitro-6'-trifluormethyl-diphenylamin gemäß Anspruch 1.
4. Die Verbindung 2,3,5,6-Tetrafluor-2',4'-dinitro-6'-trifluormethyl-diphenylamin gemäß Anspruch 1.
5. Verfahren zur Herstellung der Verbindungen der Formel I gemäß Anspruch 1, dadurch gekennzeichnet, daß man eine Verbindung der Formel II

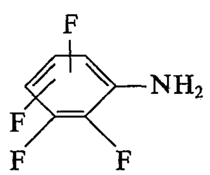

(II)

in Gegenwart einer Base mit der Verbindung der Formel III

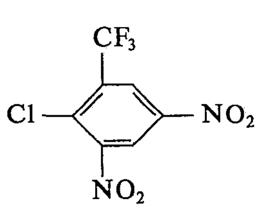

(III)

umsetzt.

6. Schädlingsbekämpfungsmittel, welches als aktive Komponente eine Verbindung der Formel I gemäß Anspruch 1 zusammen mit geeigneten Trägern und/oder anderen Zuschlagstoffen enthält.

7. Die Verwendung der Verbindungen der Formel I gemäß Anspruch 1 zur Bekämpfung von unerwünschtem Pflanzenwuchs, insbesondere von Unkräutern in Kulturpflanzen.

8. Die Verwendung gemäß Anspruch 7 der Verbindungen der Formel I gemäß Anspruch 1 zur Bekämpfung von Unkräutern in Kulturen von Getreide, Reis, Soja und Baumwolle.

9. Die Verwendung der Verbindungen der Formel I gemäß Anspruch 1 zur Desikkation und Defoliation von Kulturen von Baumwolle und Kartoffeln kurz bevor deren Ernte.

10. Die Verwendung der Verbindungen der Formel I gemäß Anspruch 1 zur Bekämpfung von Mikroben.

11. Die Verwendung der Verbindungen der Formel I gemäß Anspruch 1 zur Bekämpfung von Algen.

**Claims**

1. A compound of the formula I

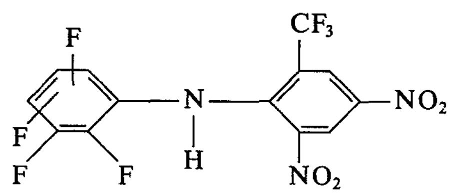

(I)

2. 2,3,4,6-Tetrafluoro-2',4'-dinitro-6'-trifluoromethyl-diphenylamine according to claim 1.

3. 2,3,4,5-Tetrafluoro-2',4'-dinitro-6'-trifluoromethyl-diphenylamine according to claim 1.

4. 2,3,5,6-Tetrafluoro-2',4'-dinitro-6'-trifluoromethyl-diphenylamine according to claim 1.

5. A process for the production of a compound of the formula I according to claim 1, which process comprises reacting a compound of the formula II

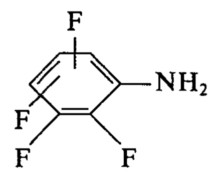

(II)

with the compound of the formula III

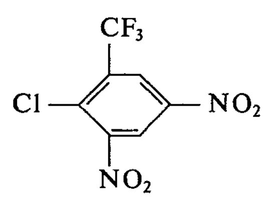

(III)

in the presence of a base.

6. A pesticidal composition which contains, as active component, a compound of the formula I according to claim 1, together with suitable carriers and/or other adjuvants.

7. A method of controlling undesired plant growth, especially weeds, in crops of cultivated plants, which comprises applying thereto a herbicidally effective amount of a compound of the formula I according to claim 1.

8. A method of controlling weeds in crops of cereals, rice, soybeans and cotton, which comprises applying thereto a herbicidally effective amount of a compound of the formula I according to claim 1.

9. A method of desiccating and defoliating cotton and potato plants shortly before harvesting, which comprises applying thereto an effective amount of a compound of the formula I according to claim 1.

10. A method of controlling mocrobes, which comprises applying thereto a microbicidally effective amount of a compound of the formula I according to claim 1.

11. A method of controlling algae, which comprises applying thereto an algicidally effective amount of a compound of the formula I according to claim 1.

**Revendications**

1. Les composés de formule I

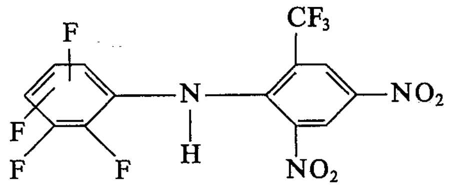

(I)

2. Le composé 2,3,4,6-tétrafluoro-2',4'-dinitro-6'-trifluorométhyl-diphénylamine selon la revendication 1.

3. Le composé 2,3,4,5-tétrafluoro-2',4'-dinitro-6'-trifluorométhyl-diphénylamine selon la revendication 1.

4. Le composé 2,3,5,6-tétrafluoro-2',4'-dinitro-6'-trifluorométhyl-diphénylamine selon la revendication 1.

5. Procédé de préparation des composés de formule I selon la revendication 1, caractérisé en ce que l'on fait réagir un composé de formule II

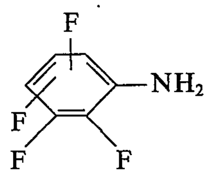

(II)

en présence d'une base, avec le composé de formule III

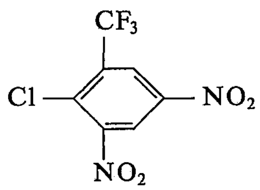

(III)

6. Produits pesticides contenant en tant que composant actif un composé de formule I selon la revendication 1 avec des véhicules et/ou d'autres additifs appropriés.

7. L'utilisation des composés de formule I selon la revendication 1 dans la lutte contre les croissances indésirables de végétaux et en particulier de mauvaises herbes dans les végétaux cultivés.

8. L'utilisation des composés de formule I selon la revendication 1 dans la lutte contre les mauvaises herbes dans les cultures de céréales, de riz, de soya et de coton.

9. L'utilisation des composés de formule I selon la revendication 1 pour la dessication et la défoliation de cultures de coton et de pommes de terre peu avant la récolte.

10. L'utilisation des composés de formule I selon la revendication 1 dans la lutte contre les microbes.

11. L'utilisation des composés de formule I selon la revendication 1 dans la lutte contre les algues.